(19)

Europäisches
Patentamt
European
Patent Office
Office européen
des brevets

(11) **EP 3 025 850 A1**

(12) **EUROPEAN PATENT APPLICATION**
published in accordance with Art. 153(4) EPC

(43) Date of publication:
**01.06.2016  Bulletin 2016/22**

(51) Int Cl.:
***B29C 65/08*** (2006.01)       ***C08J 5/04*** (2006.01)

(21) Application number: **14829773.2**

(86) International application number:
**PCT/JP2014/069516**

(22) Date of filing: **24.07.2014**

(87) International publication number:
**WO 2015/012335 (29.01.2015 Gazette 2015/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.07.2013  JP 2013153585**

(71) Applicant: **Teijin Limited
Osaka-shi, Osaka 541-0054 (JP)**

(72) Inventor: **SANO, Hiroki
Matsuyama-shi
Ehime 791-8044 (JP)**

(74) Representative: **Small, Gary James
Carpmaels & Ransford LLP
One Southampton Row
London WC1B 5HA (GB)**

(54) **FIBER-REINFORCED PLASTIC ASSEMBLY AND METHOD FOR MANUFACTURING SAME**

(57)     There is provided a fiber-reinforced plastic joined body including a joined portion (BP1) at which fiber-reinforced resin shaped products are fixed, the fiber-reinforced resin shaped product containing carbon fibers and a thermoplastic resin as a matrix by an ultrasonic welding, wherein when a resin joined body having a joined portion (BP2) at which resin shaped products substantially constituted by the thermoplastic resin are fixed by the ultrasonic welding is regarded as a basis, (i) tensile shear strength at the joined portion (BP1) of the fiber-reinforced plastic joined body is in the range of 3 to 8 times larger than a tensile shear strength at the joined portion (BP2) of the resin joined body, and (ii) cross tensile strength at the joined portion (BP1) of the fiber-reinforced plastic joined body is in the range of 2 to 5 times larger than a cross tensile strength at the joined portion (BP2) of the resin joined body.

EP 3 025 850 A1

**Description**

Technical Field

The present invention relates to a joined body of a fiber-reinforced plastic containing a carbon fiber and a thermoplastic resin. More specifically, it relates to a fiber-reinforced plastic joined body having a good strength and a method for manufacturing the same, and it can be suitably used as a structural member represented by an automobile.

Background Art

Recently, in the machinery field, a so-called fiber-reinforced resin shaped product (hereinafter also referred to as fiber-reinforced plastic) containing a thermoplastic resin as a matrix and a reinforcing fiber such as a carbon fiber has attracted attention. For example, there is proposed a method for increasing rigidity by forming a closed cross section, in joining of the fiber-reinforced plastics, which is required for manufacturing components and structural members of automobiles. At the time when the fiber-reinforced plastics including a thermoplastic resin as a matrix are joined each other, there have been proposed mechanical joining using bolts/nuts, rivets, or the like, chemical joining using an adhesive, thermal joining using ultrasonic welding, vibration welding, or the like. Of these, the ultrasonic welding has been widely used for the reasons of short cycle time and the like in addition to the reason that a third material is unnecessary.

The ultrasonic welding is a method of welding a body to be heated and a body to be joined for joining thereto, by pressing a resonance body called a horn against the body to be heated, simultaneously applying high-frequency mechanical vibration from the resonance body, converting the mechanical vibration transmitted to the body to be heated into friction heat, and thereby melting the body to be heated.

However, there are some problems in the ultrasonic welding of the fiber-reinforced plastics. For example, the thermoplastic resin is melted at the time when the fiber-reinforced plastic is subjected to the ultrasonic welding but there is a concern that, owing to a decrease in viscosity of the melted resin, the force for holding the reinforcing fiber decreases and the reinforcing fiber springs back, and thereby the strength of the joined body decreases. Therefore, it has been proposed to suppress the spring back by sufficiently cooling the welding portion at the time of the ultrasonic welding of the fiber-reinforced plastic. Even though, it is hard to say that enough strength is obtained.

In general, joining strength of the joined body obtained by the ultrasonic welding is determined by the product of welding strength per area of the joined portion and welding area. In order to regulate them, various conditions at the time of the ultrasonic welding, such as amplitude of an ultrasonic wave, welding time, and pressurizing force are controlled. However, it is not clear which parameter is effective for increasing the joining strength of the fiber-reinforced plastic.

For example, Patent Document 1 proposes a method of arranging a thermoplastic resin on a joining surface of a fiber-reinforced plastic beforehand. However, it is not necessarily excellent method since the method separately requires another material for welding. Moreover, Patent Document 2 describes an example in which fiber-reinforced plastics are subjected to ultrasonic welding to manufacture a joined body having excellent flexural strength.

Citation List

Patent Documents

  [Patent Document 1] JP-A-2013-43321
  [Patent Document 2] JP-A-2012-158141

Summary of the Invention

Problems that the Invention is to Solve

An object of the present invention is to provide a fiber-reinforced plastic joined body having excellent joining strength.

Another object of the invention is to provide a method for efficiently manufacturing a fiber-reinforced plastic joined body having excellent joining strength in which fiber-reinforced resin shaped products are joined.

Means for Solving the Problems

As a result of extensive studies for obtaining a fiber-reinforced plastic joined body having excellent joining strength in which fiber-reinforced resin shaped products are joined, the present inventors have found that it is possible to obtain an objective fiber-reinforced plastic joined body by regulating the pressurizing force to be applied to the horn before ultrasonic welding and the pressurizing force to be applied to the horn during the welding. Thus, they have accomplished the invention.

Namely, the invention relates to the matters described in the following [1] to [6].

[1] A fiber-reinforced plastic joined body including a joined portion (BP1) at which fiber-reinforced resin shaped products are fixed, the fiber-reinforced resin shaped product containing a carbon fiber and a thermoplastic resin as a matrix by an ultrasonic welding, wherein when a resin joined body having a joined portion (BP2) at which resin shaped products substantially constituted by the thermoplastic resin are fixed by the ultrasonic welding is regarded as a basis, (i) a tensile shear strength at the joined portion (BP1) of the fiber-reinforced plastic joined body is in the range of 3 to 8 times larger than a tensile shear strength at the joined portion (BP2) of the resin joined body, and (ii) a cross tensile strength at the joined portion (BP1) of the fiber-reinforced plastic joined body is in the range of 2 to 5 times larger than a cross tensile strength at the joined portion (BP2) of the resin joined body.

[2] The fiber-reinforced plastic joined body according to [1], wherein a welding area in the joined portion (BP1) of the fiber-reinforced plastic joined body is in the range of 2 to 10 times larger than a welding area at the joined portion (BP2) of the resin joined body.

[3] A method for manufacturing the fiber-reinforced plastic joined body according to [1] or [2], the method including: bringing surfaces of at least two fiber-reinforced resin shaped products into contact; pressing a horn for ultrasonic welding against a surface of at least one fiber-reinforced resin shaped product, the surface being opposite to a contact surface while applying pressurizing force; and imparting an ultrasonic wave to weld the fiber-reinforced resin shaped products, wherein a pressurizing force applied to the horn before welding is in the range of 20 to 100% of a pressurizing force applied to the horn during welding.

[4] The method for manufacturing the fiber-reinforced plastic joined body according to [3], wherein a pressure per unit area of a portion at which the horn and the fiber-reinforced resin shaped product are in contact before welding is 50 MPa or more.

[5] The method for manufacturing the fiber-reinforced plastic joined body according to [3] or [4], wherein the fiber-reinforced resin shaped product has a flexural modulus of 10 to 40 GPa.

[6] The method for manufacturing the fiber-reinforced plastic joined body according to any one of [3] to [5], wherein the fiber-reinforced resin shaped product has a surface Ra of 0.2 to 5 $\mu$m.

Advantage of the Invention

According to the present invention, there can be provided a fiber-reinforced plastic joined body having excellent joining strength in which fiber-reinforced resin shaped products are joined.

Moreover, according to the invention, there can be provided a method for efficiently manufacturing a fiber-reinforced plastic joined body having excellent joining strength in which fiber-reinforced resin shaped products are joined.

The fiber-reinforced plastic joined body of the invention having a joined portion (BP1) at which fiber-reinforced resin shaped products containing carbon fibers and a thermoplastic resin are fixed by ultrasonic welding has excellent joining strength as compared with a resin joined body containing no carbon fiber and having a joined portion (BP2) at which resin shaped products are fixed by ultrasonic welding. The fiber-reinforced plastic joined body of the invention can be suitably used as a structural member of a vehicle body represented by an automobile.

Description of Embodiments

The following will explain embodiments of the invention sequentially.

The invention is a fiber-reinforced plastic joined body having a joined portion (BP1) at which fiber-reinforced resin shaped products containing carbon fibers and a thermoplastic resin as a matrix are fixed by ultrasonic welding. When a resin joined body having a joined portion (BP2) at which resin shaped products substantially constituted by the thermoplastic resin are fixed by ultrasonic welding is regarded as a basis, the fiber-reinforced plastic joined body is characterized in that (i) tensile shear strength at the joined portion (BP1) of the fiber-reinforced plastic joined body is in the range of 3 to 8 times larger than the tensile shear strength at the joined portion (BP2) of the resin joined body, and (ii) cross tensile strength at the joined portion (BP1) of the fiber-reinforced plastic joined body is in the range of 2 to 5 times larger than the cross tensile strength at the joined portion (BP2) of the resin joined body.

Here, the "fiber-reinforced resin shaped product substantially constituted by the thermoplastic resin" means a shaped product substantially constituted by the thermoplastic resin that is a matrix and does not contain any carbon fiber. Moreover, "when a resin joined body having a joined portion (BP2) at which resin shaped products are fixed by ultrasonic welding is regarded as a basis" means a case where comparison is performed with the joined portion (BP2) subjected to fixing by ultrasonic welding under the same conditions as in the ultrasonic welding in the "fiber-reinforced plastic joined body having a joined portion (BP1) at which fiber-reinforced resin shaped products are fixed by ultrasonic welding".

Namely, in the invention, the joining strength, specifically tensile shear strength and cross tensile strength at the joined portion (BP1) of the fiber-reinforced plastic joined body having the joined portion (BP1) at which at least two fiber-reinforced resin shaped products are fixed by ultrasonic welding, the at least two fiber-reinforced resin shaped products containing carbon fibers dispersed in a matrix under certain conditions are excellent as compared with the tensile shear strength and cross tensile strength at the joined portion (BP2) of the resin joined body having the joined portion (BP2) at which at least two resin shaped products constituted by the thermoplastic resin used as the matrix are fixed by ultrasonic welding under the same conditions as mentioned above.

Meanwhile, the joined portions (BP1, BP2) used in the invention are portions (hereinafter sometimes referred to as welding surface) at which the fiber-reinforced resin shaped products or resin shaped products are welded by melting the thermoplastic resin contained in the fiber-reinforced resin shaped products or resin shaped products, and subsequently cooling the thermoplastic resin to solidify it, or portions containing the welded surface. The joined portions (BP1, BP2) are the substantially same as portions to which mechanical vibration oscillated from an ultrasonic welding machine was applied or include the portions. In Example 1 and Comparative Example 1 to be mentioned later, the shapes of the welded portions are both ring shapes, but the shape in Example 1 is a thicker ring shape than that in Comparative Example 1. In the case of using a horn having a pin shape at the end, welding does not usually occur at the central part of the joined portion. Therefore, the area of the joined portion (BP1) in the invention is larger than the welded area. Namely, the joined portion includes the welded portion.

Relative to the joined portion (BP2) at which the resin shaped products are fixed, substantially constituted by the same thermoplastic resin as the thermoplastic resin constituting the fiber-reinforced plastic joined body, in the case where the tensile shear strength at the joined portion (BP1) is less than three times or the cross tensile strength is less than twice, it is hard to say that the joined body has a sufficient joining strength for use as a structural member. Moreover, relative to the joined portion (BP2), the case where the tensile shear strength at the joined portion (BP1) exceeds eight times or the cross tensile strength exceeds five times is substantially unlikely from the standpoints of abrasion of the horn for use in ultrasonic welding or the like, as mentioned later.

In the case of using Nylon 6, for example, as a thermoplastic resin, the tensile shear strength of the fiber-reinforced plastic joined body of the invention varies depending on the content ratio of the carbon fiber. However, the strength tends to be in the range of about 1.5 to 5.0 kN (20 to 80 MPa) in the case where the part to be pressed by the horn for use in the ultrasonic welding has a circular shape having a diameter of about 10 mm (about 10 mm$\varphi$). Moreover, the cross tensile strength of the fiber-reinforced plastic joined body of the invention tends to be in the range of about 0.8 to 2.5 kN (10 to 30 MPa) in the case where the part to be pressed by the horn for use in the ultrasonic welding has about 10 mm$\varphi$. Meanwhile, the tensile shear strength and the cross tensile strength of the fiber-reinforced plastic joined body of the invention are not limited to the above ranges.

In order that the tensile shear strength and the cross tensile strength have the above relationship, surprisingly, it has been found out that, in the performance of the ultrasonic welding, it is extremely effective to regulate the pressurizing force before welding and the pressurizing force during welding to be applied to portions to be joined of the two fiber-reinforced plastics.

In the ultrasonic welding, welding is generally started from a part at which the members to be welded are in direct contact with each other as a starting point. The fiber-reinforced plastic has high rigidity as compared with a thermoplastic resin containing no reinforcing fiber. Therefore, when the fiber-reinforced plastics are brought into contact with each other and pressurizing force is applied to the contact portion so that the plastics push each other, the fiber-reinforced plastics are more strongly pressed each other as compared with the case where the same pressurizing force is imparted to the resin shaped products substantially constituted by the thermoplastic resin, and containing no reinforcing resin. As above, since the fiber-reinforced plastics are strongly pressed each other, the area of the contact portion increases in a wide range. Namely, the area of the contacting part increases starting from the part which has been in contact before the application of the pressurizing force, and thus the welding is achieved in a wider area. Since the thermoplastic resin containing no reinforcing fiber has low rigidity as compared with the fiber-reinforced plastic, even when high pressurizing force is applied to the contact portion of the thermoplastic resins containing no reinforcing fiber, most of the pressurizing force is absorbed by the thermoplastic resins and contribution to an increase in area of the contact portion is small.

As a method for regulating the pressurizing force before welding to be applied to the portions to be joined of the two fiber-reinforced plastics and the pressurizing force during welding, specifically, there is preferred a method of controlling the pressurizing force to be applied to a welding horn (also simply referred to as "horn") before the ultrasonic welding to the range of 20 to 100% of the pressurizing force to be applied during welding, and preferably controlling the pressure of the portion per unit area at which the horn before welding is in contact with the fiber-reinforced resin shaped product to 50 MPa or more. In the case where the pressurizing force to be applied before welding is less than 20% of the pressurizing force to be applied during welding, since the pressurizing force to be applied at an early stage of welding may be insufficient, the area at which two fiber-reinforced plastics are in contact decreases. As a result, it is considered that effective ultrasonic welding cannot be performed and hence the welding strength (joining strength) of the joined body decreases. The higher the pressurizing force is, the more the contact area increases. Therefore, higher pressurizing force is effective for an increase in welding strength. However, when the pressurizing force is too high, there is a concern that the welding horn (especially the end portion of the horn) may be severely abraded. The pressurizing force to be applied to the horn before welding is more preferably 30 to 80%, further preferably 30 to 75% of the pressurizing force to be applied to the horn during welding. Moreover, also in the case where the pressure of the portion per unit area at which the horn before welding is in contact with the fiber-reinforced resin shaped product is less than 50 MPa, the effect of increasing the area of the contact portion on the welding surface is sometimes small. Such a case is not preferred.

The fiber-reinforced plastic for use in the fiber-reinforced plastic joined body preferably has high rigidity and preferably has a flexural modulus of 10 to 40 GPa. In the case where the flexural modulus of the fiber-reinforced plastic is less than 10 GPa, there is a possibility that the effect of increasing the area of the contact portion is not sufficient. In the case where the flexural modulus of the fiber-reinforced plastic exceeds 40 GPa, there is a possibility that the end of the welding horn is easily abraded due to exceedingly high rigidity. The flexural modulus of the fiber-reinforced plastic is preferably 15 to 35 GPa, more preferably 15 to 30 GPa.

The method for regulating the flexural modulus of the fiber-reinforced plastic is not particularly limited but, specifically, the regulation can be achieved by regulating the aspect ratio of the carbon fiber, the content of the carbon fiber, the state of a carbon fiber bundle, and the like. The flexural modulus of the fiber-reinforced plastic tends to become high as the aspect ratio of the carbon fiber increases, the content of the carbon fiber increases, and the number of carbon fibers constituting the carbon fiber bundle decreases.

Furthermore, in order to increase the area of the contact portion on the welding surface, it is preferable that the surface of the fiber-reinforced plastic before welding has fine irregularities. Namely, the surface Ra (arithmetic average roughness) of the fiber-reinforced plastic at the joined portion (BP1) preferably falls within the range of 0.2 to 5 $\mu$m and is more preferably 1 to 5 $\mu$m.

The method for regulating the surface Ra of the fiber-reinforced plastic to the above range is not particularly limited, but specifically, the regulation can be achieved by regulating the aspect ratio of the carbon fiber, the content of the carbon fiber, the state of the carbon fiber bundle, and the like. The surface Ra of the fiber-reinforced plastic tends to become high as the aspect ratio of the carbon fiber increases, the content of the carbon fiber increases, and the number of carbon fibers constituting the carbon fiber bundle decreases.

(Fiber-Reinforced Resin Shaped Product (Fiber-Reinforced Plastic))

The fiber-reinforced plastic joined body of the invention is obtained by joining at least two fiber-reinforced resin shaped products by ultrasonic welding.

At least one of the two fiber-reinforced resin shaped products (sometimes referred to as "fiber-reinforced plastic") for use in the invention is preferably a sheet-form shaped product containing carbon fibers and a thermoplastic resin as a matrix. Namely, there is preferably used a sheet-form material in which carbon fibers and a thermoplastic resin are substantially integrated. Since the sheet-form fiber-reinforced plastic (i) is brought into contact with the horn and heated for the ultrasonic welding and it is necessary to transmit the heat sufficiently to the other fiber-reinforced plastic (ii) to be joined, the thickness of the plastic (i) is preferably 10 mm or less, more preferably in the range of 0.5 to 10 mm, further preferably in the range of 0.5 to 5 mm.

The shape of the other fiber-reinforced plastic (ii) to be joined is not particularly limited as long as the portion to be joined has a shape capable of sufficiently coming into contact with the portion to be joined of the above fiber-reinforced plastic (i) (for example, mutually flat surfaces or curved surfaces having the same shape). For example, there may be mentioned a sheet shape, similarly to the above (i), a prismatic body having a thickness of 5 mm or more, a shape of a half-cut column, and the like.

(Carbon Fiber)

The carbon fiber to be contained in the fiber-reinforced plastic is not particularly limited, but specifically, there may be mentioned PAN-based carbon fibers and pitch-based carbon fibers. Of these, since PAN-based carbon fibers are light in weight, they can be suitably used for weight reduction of structural materials. The carbon fiber may be used singly or two or more kinds of carbon fibers may be used in combination. The form of the carbon fiber is not particularly limited and may be either a continuous fiber or a discontinuous fiber.

In the case where the carbon fiber is a continuous fiber, it may be in a form of a knit or a fabric or may be a so-called UD sheet in which the carbon fiber is unidirectionally aligned to form a sheet shape. In the case of the UD sheet, there can be used one stacked into a multilayer so that fiber aligning directions of individual layers are crossed respectively (for example, alternately stacked in orthogonal directions. The average fiber diameter of the continuous fiber is usually suitably 5 to 20 μm.

Moreover, in the case of the discontinuous carbon fiber, the carbon fiber may be aligned in a certain direction in the matrix, may be two-dimensionally disorderly dispersed in a plane, or may be in a three-dimensionally disorderly dispersed state. It is preferable to use discontinuous carbon fibers having an average fiber diameter of 5 to 20 μm and an average fiber length of 3 to 100 mm.

The carbon fiber may be used with combining continuous fibers and discontinuous fibers in one fiber-reinforced plastic. Moreover, one fiber-reinforced plastic containing continuous fibers and another fiber-reinforced plastic containing discontinuous fibers may be combined by stacking or the like.

In the case where the carbon fibers are discontinuous and are two-dimensionally disorderly dispersed, it may be one in a sheet shape prepared by wet sheet-making or one in a sheet shape or a mat shape (hereinafter sometimes collectively referred to as "mat ") prepared by arranging the discontinuous carbon fibers so as to be dispersed and stacked. The average fiber diameter in this case is preferably 5 to 20 μm, and the average fiber length is preferably 3 to 100 mm, more preferably 10 to 100 mm, and particularly more preferably 12 to 50 mm. In the latter mat, the average fiber length of the carbon fibers contained in the mat is important and, when the average fiber length is 3 mm or more, the mat can sufficiently function as carbon fibers and sufficient joining strength is easily obtained. Moreover, when the average fiber length is 100 mm or less, flowability at the time of molding is high and a desired shaped product is easily obtained.

The fiber-reinforced plastic in the invention is preferably a mat in which the carbon fibers have an average fiber length falling within the above range and is substantially two-dimensionally randomly oriented (hereinafter referred to as "random mat"). Here, "substantially two-dimensionally randomly oriented" means a state that the carbon fibers are oriented not in a certain direction such as one direction but randomly in an in-plane directions of the fiber-reinforced plastic and is arranged in the sheet plane without showing a certain directionality as a whole. The fiber-reinforced plastic obtained using the random mat is a substantially isotropic material having no anisotropy in the plane.

In the above random mat, all or most of carbon fibers may be present in a state that the carbon fibers are opened into a single fiber form. However, particularly preferred is an isotropic random mat in which a fiber bundle formed by bundling a certain number or more of single fibers and a single fiber or a fiber bundle in a state near to the single fiber are mixed in a specific ratio. Such an isotropic random mat and a process for manufacturing the same is described in detail in the pamphlet of WO2012/105080 and the specification of JP-A-2013-49208.

The aforementioned suitable random mat is an isotropic random mat in which a carbon fiber bundle (A) constituted by fibers of a critical number of single fiber or more defined by the following expression (a) and a carbon fiber bundle (B$_1$) containing fibers of less than the critical number of single fiber and/or single carbon fibers (B$_2$) are mixed, wherein the ratio of the carbon fiber bundle (A) to the total amount of fibers in the isotropic random mat is 20 to 99 Vol%, preferably 30 to 90 Vol%, and the average number (N) of fibers in the carbon fiber bundle (A) satisfies the following expression (b).

$$\text{Critical number of single fiber} = 600/D \qquad \text{(a)}$$

$$0.6 \times 10^4/D^2 < N < 1 \times 10^5/D^2 \qquad \text{(b)}$$

Here, D is average fiber diameter (μm) of single carbon fiber.

In the case where the average number (N) of fibers in the carbon fiber bundle (A) is $0.6 \times 10^4/D^2$ or less, it becomes difficult to obtain one having high carbon fiber volume content (Vf) and it becomes difficult to obtain a fiber-reinforced plastic having excellent strength. Moreover, in the case where the average number (N) of fibers in the carbon fiber bundle (A) is $1 \times 10^5/D^2$ or more, a locally thick portion is formed, which tends to cause voids. Furthermore, the fiber-reinforced plastic obtained by using such a random mat has an advantage that it is easy to form fine irregularities derived from the shape of the fiber bundle on the surface.

(Suitable Random Mat and Manufacturing Method Thereof)

A preferred manufacturing method of the isotropic random mat will be illustrated.

As a preferred manufacturing method, for example, the mat can be obtained by continuously slitting a strand constituted by a plurality of carbon fibers along a fiber length direction to form a plurality of narrow strands having a width of 0.05 to 5 mm as needed, subsequently continuously cutting the strands into an average fiber length of 3 to 100 mm, and depositing them in a layer form on a breathable conveyor net or the like in a state that the cut carbon fiber bundle is opened by blowing with a gas. On this occasion, the mat can be also manufactured by a method for manufacturing the isotropic random mat in which a thermoplastic resin is included by depositing a particulate or short fibrous thermoplastic resin on a breathable conveyor net together with the carbon fibers or supplying a melted thermoplastic resin on a mat-shaped carbon fiber layer in a film form and allowing the resin to permeate therein. In these methods, it is suitable to form an isotropic random mat wherein, by adjusting fiber-opening conditions, opening is performed so that the carbon fiber bundle (A) obtained by bundling single fibers of the critical number of single fiber or more defined by the above expression (a) and a carbon fiber bundle ($B_1$) obtained by bundling single fibers of less than the critical number of single fiber and/or single carbon fibers ($B_2$) are mixed, the ratio of the carbon fiber bundle (A) to the total amount of carbon fibers in the isotropic random mat is controlled to 20 to 99 Vol%, preferably 30 to 90 Vol%, particularly preferably 50 to 90 Vol%, and the average number (N) of fibers in the carbon fiber bundle (A) satisfies the above expression (b).

Meanwhile, in order to control the average number (N) of fibers in the carbon fiber bundle (A) to the above range, the control can be achieved by adjusting the size of the fiber bundle to be subjected to the cutting process, for example, the width of the bundle or the number of the fibers per width, in the aforementioned suitable method for manufacturing the random mat. Specifically, there may be mentioned a method of subjecting the fiber bundle to the cutting process after increasing the width of the fiber bundle by widening or the like and a method of providing a slitting process before the cutting process. The fiber bundle may be slit simultaneously with cutting.

With regard to the above isotropic random mat, when the areal weight of the carbon fibers is in the range of 25 to 4500 g/m$^2$, the ratio of the carbon fiber bundle (A) constituted by fibers of the critical number of single fiber or more defined by the following expression (a) to the total amount of carbon fibers falls within the above range, and the average number (N) of fibers in the carbon fiber bundle (A) satisfies the above expression (b), a balance of moldability and mechanical strength of the fiber-reinforced plastic joined body as a composite material becomes satisfactory.

With regard to the fiber-reinforced plastic obtained by using the isotropic random mat as mentioned above, in the plane thereof, the carbon fibers are not aligned in a certain direction and are dispersedly arranged in random directions. Namely, such a fiber-reinforced plastic is an in-plane isotropic material. In the shaped product such as the fiber-reinforced plastic joined body of the invention in which such fiber-reinforced plastics are joined each other, the isotropy of the carbon fiber in the random mat is maintained. The isotropy of the fiber-reinforced plastic can be quantitatively evaluated by determining the ratio of tensile moduli at two directions which are orthogonal to each other. When, among the moduli at two directions which are orthogonal to each other, a ratio obtained by dividing a larger value by a smaller value does not exceed 2, the plastic is regarded as isotropic. When the ratio does not exceed 1.3, the plastic is evaluated to be excellent in isotropy.

The length of the carbon fiber in the fiber-reinforced plastic is expressed by an average fiber length of the carbon fibers in the fiber-reinforced plastic obtained. As a method for measuring the average fiber length, for example, there is adopted a method of measuring fiber length values of randomly extracted 100 fibers by means of a vernier caliper or the like up to a unit of 1 mm and determining an average thereof. Preferable average fiber length of the carbon fibers is 3 mm to 100 mm. The random mat may be constituted by carbon fibers having a single fiber length or carbon fibers having different fiber lengths may be mixed therein.

In the fiber-reinforced plastic for use in the invention, the average fiber diameter of the carbon fibers is 5 to 20 $\mu$m, particularly preferably 5 to 12 $\mu$m, and the adhesion strength between the carbon fiber and the thermoplastic resin as a matrix is desirably 5 MPa or more as strength in a strand tensile shear test. The strength can be improved by a method of changing a surface oxygen concentration ratio (O/C) of the carbon fiber, a method of imparting a sizing agent to the carbon fiber to increase the adhesion strength between the carbon fiber and the matrix, and a similar method.

Specifically, in the case where the average fiber diameter of the carbon fibers constituting the fiber-reinforced plastic is 5 to 7 $\mu$m, the critical number of single fiber defined by the above expression (a) is 86 to 120. Also, in the case where the average fiber diameter of the carbon fibers is 5 $\mu$m, the average number of fibers in the carbon fiber bundle (A) falls within the range of 240 to less than 4000. In particular, a range of 300 to 2500 is preferable. The average number of fibers is more preferably 400 to 1600. Also, in the case where the average fiber diameter of the carbon fibers is 7 $\mu$m, the average number of fibers in the carbon fiber bundle (A) falls within the range of 122 to 2040. In particular, a range of 150 to 1500 is preferable and 200 to 800 is more preferable.

Furthermore, as a form of the carbon fiber bundle (A), it is preferable that a ratio of the carbon fiber bundle having a thickness of 100 $\mu$m or more is less than 3% of the total number of the carbon fiber bundle (A). When the carbon fiber bundle having a thickness of 100 $\mu$m or more is less than 3%, the thermoplastic resin is easily impregnated into the fiber bundle, so that the case is preferable. More preferably, the ratio of the carbon fiber bundle having a thickness of 100 $\mu$m or more is less than 1%. In order to control the ratio of the carbon fiber bundle having a thickness of 100 $\mu$m or more to less than 3%, a method of widening a fiber to be used to be thin or the like may be exemplified.

(Matrix)

Examples of the kind of the thermoplastic resin to be a matrix of the fiber-reinforced plastic include vinyl chloride-based resins, vinylidene chloride-based resins, vinyl acetate-based resins, polyvinyl alcohol-based resins, polystyrene-based resins, acrylonitrile-styrene-based resins (AS resins), acrylonitrile-butadiene-styrene-based resins (ABS resins), acrylic resins, methacrylic resins, polyethylene-based resins, polypropylene-based resins, various types of thermoplastic polyamide-based resins, polyacetal-based resins, polycarbonate-based resins, polyethylene terephthalate-based resins, polyethylene naphthalate-based resins, polybutylene naphthalate-based resins, polybutylene terephthalate-based resins, polyarylate-based resins, polyphenylene ether-based resins, polyphenylene sulfide-based resins, polysulfone-based resins, polyether sulfone-based resins, polyether ether ketone-based resins, polylactic acid-based resins, and the like. Of these, there may be preferably mentioned Nylons (heat-melting polyamides), polycarbonate, polyoxymethylene, polyphenylene sulfide, polyphenylene ether, modified polyphenylene ether, polyethylene terephthalate, polybutylene terephthalate, polyethylene naphthalate, polyethylene, polypropylene, polystyrene, polymethyl methacrylate, AS resin, ABS resin, and the like.

In view of a balance of costs and physical properties, at least one selected from the group consisting of Nylon, polypropylene, polycarbonate, and polyphenylene sulfide is more preferable. Moreover, as Nylons (hereinafter sometimes referred to as "PA"), there is preferable at least one selected from the group consisting of PA6 (also referred to as polycaproamide, polycaprolactam, or poly ε-caprolactam), PA26 (polyethylene adipamide), PA46 (polytetramethylene adipamide), PA66 (polyhexamethylene adipamide), PA69 (polyhexamethylene azepamide), PA610 (polyhexamethylene sebacamide), PA611 (polyhexamethylene undecamide), PA612 (polyhexamethylene dodecamide), PA11 (polyundecanamide), PA12 (polydodecanamide), PA1212 (polydodecamethylene dodecamide), PA6T (polyhexamethylene terephthalamide), PA6I (polyhexamethylene isophthalamide), PA912 (polynonamethylene dodecamide), PA1012 (polydecamethylene dodecalamide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephthalamide), PA12I (polydodecamethylene isophthalamide), and polyamide MXD6 (polymethaxylylene adipamide). These thermoplastic resins may contain additives such as a stabilizer, a flame retardant, a pigment, and a filler as needed. These thermoplastic resins may be used singly or two or more thereof may be used in combination.

The content of the matrix in the fiber-reinforced plastic is preferably 30 to 200 parts by weight based on 100 parts by weight of the carbon fiber. More preferred is 30 to 150 parts by weight of the matrix based on 100 parts by weight of the carbon fiber and further preferred is 35 to 100 parts by weight of the matrix based on 100 parts by weight of the carbon fiber. When the thermoplastic resin is less than 30 parts by weight based on 100 parts by weight of the carbon fiber, a dry carbon fiber insufficient in impregnation sometimes increases. On the other hand, when the content exceeds 200 parts by weight, the fiber-reinforced plastic frequently becomes unsuitable as structural members owing to exceedingly little carbon fiber.

The thickness of the fiber-reinforced plastic is suitably in the range of 0.5 to 10 mm in view of moldability, particularly shaping ability with a mold and, in particular, a thickness of 1 to 5 mm is most suitable. Also, such a fiber-reinforced plastic can be used with layering two or more thereof.

The fiber-reinforced plastic for use in the invention may contain additives such as various types of fiber-form or non-fiber form fillers of an organic or inorganic fiber, a flame retardant, a UV-resistant agent, a stabilizer, a releasing agent, a pigment, a softener, a plasticizer, and a surfactant.

As a particularly suitable fiber-reinforced plastic for use in the invention, there may be mentioned a fiber-reinforced plastic including carbon fibers having an average fiber length of 3 to 100 mm, particularly 10 to 100 mm and a thermoplastic resin in such a ratio that the thermoplastic resin is 30 to 200 parts by weight based on 100 parts by weight of the carbon fibers, wherein

(i) the fiber-reinforced plastic has a sheet shape having a thickness of 0.5 to 5 mm,
(ii) the carbon fibers are arranged randomly in in-plane directions,
(iii) the areal weight of the whole carbon fiber is in the range of 25 to 4500 g/m$^2$,
(iv) the ratio of the carbon fiber bundle (A) constituted by fibers of the critical number of single fiber or more defined by the following expression (a) to the total carbon fiber is 50 to 90 Vol%, and
(v) the average number (N) of fibers in the carbon fiber bundle (A) satisfies the following expression (c).

$$\text{Critical number of single fiber} = 600/D \qquad (a)$$

$$0.7 \times 10^4/D^2 < N < 1 \times 10^5/D^2 \qquad (c)$$

Here, D is average fiber diameter (μm) of single carbon fiber.

(Method for Manufacturing Fiber-Reinforced Plastic)

As specific methods for manufacturing the fiber-reinforced plastic in the invention, injection molding, extrusion molding, press forming, and the like may be mentioned. The fiber-reinforced plastic is heated immediately before molding and plasticized, and then introduced into a mold. As heating methods, an extruder or the like is used in the case of injection molding, and a hot air dryer, an infrared heater, or the like is used in the case of press forming.

In the case where the thermoplastic resin to be used shows water-absorbing properties, it is preferable to dry it beforehand. The temperature of the thermoplastic resin to be heated is preferably melting temperature + 15°C or more and decomposition temperature - 30°C or less. When the heating temperature is lower than the range, the resin does not melt and hence molding is difficult, and when the temperature exceeds the range, decomposition of the resin sometimes proceeds.

In the case of injection molding, conventionally known methods can be used. For example, there may be mentioned a method of manufacturing a shaped product having a specific shape by means of an injection molding machine using long-fiber pellets, i.e., pellets obtained in a process of adjusting a melted thermoplastic resin to a specific viscosity, impregnating the melted thermoplastic resin into a continuous carbon fiber, and subsequently cutting the resulting product.

For manufacturing the fiber-reinforced plastic for use in the invention by press molding, for example, any of a UD sheet in which a continuous fiber is unidirectionally aligned or a paper-made sheet constituted by a discontinuous fiber, the above-described random mat, and the like in a form of a single layer or a layered body of two or more thereof in a state of containing the thermoplastic resin is heated and pressurized to melt the thermoplastic resin present in the sheet or mat and to impregnate the melted thermoplastic resin into fibers. The fiber-reinforced resin in this case may be one supplied at the time of manufacturing the sheet or mat of the carbon fibers. However, the fiber-reinforced plastic can be also manufactured by, after the manufacture of the sheet or mat constituted by the carbon fibers, layering a layer (film, nonwoven fabric, sheet, or the like) constituted by the thermoplastic resin on at least one surface of the sheet or mat, heating and pressurizing them to impregnate the thermoplastic resin to into the sheet or mat.

More specifically, in the case where the fiber-reinforced plastic for use in the invention is manufactured by press molding, there may be mentioned a method of placing a unidirectionally aligned sheet (UD sheet), a fabric, or the aforementioned isotropic random mat in a mold, then injecting and melting the thermoplastic resin to allow it to be impregnated into the carbon fiber or injecting a heated and melted thermoplastic resin to allow it to be impregnated into the carbon fiber, and subsequently cooling them. Moreover, there may be mentioned a method of arranging the film or the like of the thermoplastic resin in a mold together with the carbon fiber and heating and pressing them. Furthermore, a method of placing an isotropic random mat including the thermoplastic resin in a mold set at a specific temperature and pressing the random mat is also preferable. Heating temperature is suitably in the range of melting temperature of the thermoplastic resin + 15°C or more and decomposition temperature - 30°C or less.

In the invention, when the fiber-reinforced plastic is manufactured by press molding of the isotropic random mat containing the thermoplastic resin, excellent productivity and isotropy are achieved, so that the method is preferable. The fiber-reinforced plastic obtained by using the isotropic random mat is formed into a desired shape or surface properties are maintained and improved.

Specifically, after the shaped product is heated at a temperature of softening point of the thermoplastic resin + 30°C or higher to be softened, it is arranged in a mold and pressurized. On that occasion, as pressurizing conditions, it is preferable to apply a pressure of 0.1 to 20 MPa, preferably 0.2 to 15 MPa, and further 0.5 to 10 MPa. In the case where the pressure is less than 0.1 MPa, the isotropic random mat is not sufficiently pressed and spring-back or the like occurs, so that material strength decreases in some cases. Moreover, in the case where the pressure exceeds 20 MPa, for example, in the case where the isotropic random mat is large, an extremely large pressing machine is required and thus there is a case that is economically not preferable. As heating conditions during pressurization, for the formation of the fiber-reinforced plastic through cooling to solidify the melted thermoplastic resin, the temperature in the mold is preferably crystal melting temperature -20°C or less in the case where the thermoplastic resin is crystalline and glass transition temperature -20°C or less in the case where the resin is amorphous, although the temperature depends on the kind of the thermoplastic resin. For example, in the case of Nylons, the temperature is usually 120 to 180°C, preferably 125 to 170°C, furthermore preferably 130 to 160°C.

(Ultrasonic Welding Step)

The fiber-reinforced plastic joined body of the invention is a joined body wherein at least a part of surfaces of at least two aforementioned fiber-reinforced resin shaped products (fiber-reinforced plastic) are brought into contact with each other and an ultrasonic wave is oscillated (imparted) to the contact portion, and thereby welding the shaped products. Here, in the ultrasonic welding, it is preferable that a horn for applying the ultrasonic wave is pressed against a surface of at least one fiber-reinforced plastic, the surface being opposite to the contact portion (i.e., application of pressurizing force), and the ultrasonic wave is imparted. The position pressed by the horn is preferably adjusted so that at least a part of the contact portion of the fiber-reinforced plastics becomes a welding surface. For example, it is preferable to press the end of the horn against the point at which a line passing through a central point of the contact portion and perpendicular to the contact surface and a surface opposite to the contact surface of the fiber-reinforced plastic intersect each other.

By imparting the ultrasonic wave as mentioned above, the thermoplastic resin is melted. Then, the thermoplastic resin is solidified and the fiber-reinforced plastics are fixed each other by stopping the oscillation of the ultrasonic wave and cooling the resin with keeping the pressurized state, and thereby completing the welding. The ultrasonic welding in the invention is a method wherein a resonance body called a welding horn is pressed against a body to be heated (a fiber-reinforced resin shaped product), high frequency mechanical vibration is applied from the resonance body, the mechanical vibration transmitted to the body to be heated is converted into frictional heat, and the body to be heated is melted, and thereby welding the body to be heated and a body to be joined (a fiber-reinforced resin shaped product different from the above fiber-reinforced resin shaped product). The method can be performed using a known ultrasonic welding machine. On this occasion, in the case where a welding position is fixed with fixing the position of the body to be joined, a tool called an anvil is frequently used.

In the invention, portions to be joined of surfaces of the fiber-reinforced plastics are brought into contact with each other so as to be faced each other, and the horn is brought into contact with a surface portion of one fiber-reinforced plastic opposite to the contact portion, and it is started to apply the pressurizing force. When the force reaches a specific pressurizing force, while it is continued to apply the pressurizing force (the process until this stage corresponds to "before welding" in the invention), the ultrasonic wave is then oscillated (imparted). As a result, the thermoplastic resin at least contained in the body to be heated including the portion to be joined is melted, and at least the end of the horn is pushed into the body to be heated. The whole horn may be pressed in contact with the body to be heated so as to be pushed into the body to be heated, but may not be in contact therewith. Thereafter, the impartment of the ultrasonic wave is stopped and the body to be heated is cooled. The thermoplastic resin is solidified and thus welding is completed. After the impartment is finished, the horn is released from the body to be heated after the thermoplastic resin is solidified. As above, the body to be heated and the body to be joined are welded in the welding portion by melting the thermoplastic resin in the body to be heated and finally solidifying the resin by cooling. In the invention, the time when the ultrasonic wave is oscillated (imparted) corresponds to "during welding".

In the fiber-reinforced plastic joined body obtained as mentioned above, since at least the end of the horn or preferably the whole horn including the end is pushed into the body to be heated (one fiber-reinforced resin shaped product in the invention), the pushed-in surface is usually not flat and a dent is formed. The size and shape of the dent vary depending on the size and shape of the end of the horn or the horn. The depth of the dent is not particularly limited, but in the case where the horn has a pin shape, it is preferable that the depth is deeper than the thickness of the fiber-reinforced plastic on the side to be in contact. However, the thickness of the other fiber-reinforced plastic should be considered so as not to impair the strength of the fiber-reinforced plastic joined body. In the case where the horn has a knurling structure, it is not necessary to increase the depth more than the thickness of the fiber-reinforced plastic on the side to be in contact.

Namely, the method for manufacturing the fiber-reinforced plastic shaped product of the invention is preferably a method for manufacturing the fiber-reinforced plastic joined body, the method including bringing surfaces of at least two fiber-reinforced resin shaped products into contact with each other, pressing an ultrasonic welding horn with applying pressurizing force against a surface of at least one fiber-reinforced resin shaped product opposite to the surface brought into contact, and imparting an ultrasonic wave to weld the fiber-reinforced resin shaped products each other,
wherein a pressurizing force applied to the horn before welding (before imparting the ultrasonic wave) is in a range of 20 to 100% of the pressurizing force applied to the horn during welding (during imparting the ultrasonic wave).

As conditions at the time of ultrasonic welding for controlling strength such as tensile strength in the case of obtaining the fiber-reinforced plastic joined body of the invention, there may be, for example, mentioned welding time (imparting time for which the ultrasonic wave is oscillated), amplitude of the ultrasonic wave, and the pressurizing force applied to the horn. As conditions at the time of the ultrasonic welding in the invention, the welding time is preferably 0.5 to 5 seconds and the amplitude is preferably 30 to 100 μm. The pressurizing force includes pressurizing force before welding and pressurizing force during welding, and the pressurizing force before welding is in the range of preferably 0.4 to 2.0 kN, more preferably 0.6 to 1.8 kN. The pressure per unit area at the portion where the horn before welding and the fiber-reinforced resin shaped product are in contact is preferably 25 MPa or more, and particularly, a pressure of 50 MPa or more is preferable due to good joining strength. The pressurizing force during welding may be constant or may be changed continuously or stepwise. Moreover, it is preferable that the pressurizing force during welding is larger than that before welding, since joining strength is excellent. The pressurizing force during welding is in the range of preferably 1.0 to 3.0 kN, more preferably 1.0 to 2.5 kN. With regard to the relationship of the pressurizing force between before welding and during welding, the pressurizing force before welding applied to the horn for use in the ultrasonic welding is preferably in the range of 20 to 100% of the pressurizing force applied during welding, more preferably 30 to 80%, and further preferably 30 to 75% thereof. These conditions can be appropriately selected depending on the depth and size, and desired strength of the joining point.

As the size (area) of the joined portion (BP1) in the fiber-reinforced plastic joined body of the invention, when the welding area at the joined portion (BP2) at which the resin shaped products are fixed by the ultrasonic welding, the resin shaped products substantially constituted by the thermoplastic resin is regarded as a basis, the welding area in the joined portion of the fiber-reinforced plastic joined body having the joined portion (BP1) is preferably in the range of 2 to 10 times, and more preferably in the range of 2 to 5 times. In the case where the joining area is less than 2 times, a reinforcing effect owing to an increase in welding area of the fiber-reinforced plastic joined body cannot be expected and it becomes difficult to obtain excellent welding strength. On contrary, since the pressurizing force to be applied to the end of the welding horn is too high for increasing the area beyond 10 times, there is a concern that the end of the welding horn is severely abraded. The area is preferably in the range of 2.5 to 5 times, further preferably in the range of 3 to 5 times.

The shape of the welding horn is not particularly limited, but in order to impart high pressurizing force as mentioned above, it is preferable to have an inclination toward the end part. Specifically, there may be mentioned a pin structure, a knurling structure, and the like. These structures may be present at one point or may be present at a plurality of points.

The fiber-reinforced plastic joined body of the invention is obtained by joining at least two fiber-reinforced plastics. As the joining mode, one fiber-reinforced plastic may be joined to another fiber-reinforced plastic or to other two or more fiber-reinforced plastics. A plurality of fiber-reinforced plastics may be joined to a plurality of other fiber-reinforced plastics. Examples of the shape of the fiber-reinforced plastic joined body containing the joined portion include a straight line shape, a T shape, an L shape, a V shape, an X shape, an F shape, an E-shape, an H shape, an A shape, a Y shape, a U shape, and the like.

Examples

The following will show Examples, but the present invention should not be construed as being limited thereto.

Individual values in the present Examples were determined according to the following methods. (1) In the measurement of the average fiber length of the carbon fiber, the fiber length values of 100 fibers randomly extracted from a shaped plate were measured by means of a vernier caliper up to a unit of 1 mm, and an average thereof was determined. (2) The analysis of the fiber bundle of a shaped plate was carried out in accordance with the method described in the pamphlet of WO2012/105080. (3) The tensile shear strength and cross tensile strength of a fiber-reinforced plastic joined body were measured in accordance with No. 406-87 (1987) of Society of Automotive Engineers of Japan, Inc. Specifically, the tensile shear strength was measured with a test piece having a size of 25 mm×100 mm×2.5 mm at a tensile rate of 5 mm/s, and the cross tensile strength was measured with a test piece having a size of 25 mm×75 mm×2.5 mm at a tensile rate of 5 mm/s. (4) The ratio of the welding area of a fiber-reinforced plastic joined body to the welding area of a joined body of a thermoplastic resin as a matrix was determined by measuring the surface after tensile test of each joined body by means of a vernier caliper. (5) The flexural modulus of a fiber-reinforced plastic joined body was measured in accordance with JIS K 7074 (1988). Meanwhile, the contents of JIS K 7074 (1988) are incorporated herein by reference. (6) As for the surface Ra of a fiber-reinforced plastic, an average value on a surface of 1 mm×1 mm was measured by means of a laser microscope (manufactured by Keyence Corporation, VK-X100) using an attached image-processing software.

[Manufacture Example 1] Manufacture of Fiber-Reinforced Plastic Shaped Plate

Using a carbon fiber "Tenax" (registered trademark) STS40-24KS (average fiber diameter: 7 $\mu$m) manufactured by Toho Tenax Co., Ltd. cut into an average fiber length of 20 mm and a Nylon 6 resin A1030 manufactured by Unitika Ltd., a mat having a carbon fiber areal weight of 1800 g/m$^2$ and a Nylon resin areal weight of 1500 g/m$^2$, in which the carbon fiber was randomly oriented, was prepared based on the method described in the pamphlet of WO2012/105080.

Specifically, for a separating apparatus of the carbon fiber, a disk-like blade was prepared from a cemented carbide, and slitters arranged at intervals of 0.5 mm were used. For a cutting apparatus, a rotary cutter in which a spiral knife made from a cemented carbide was arranged on the surface was used. On this occasion, a pitch of the blades was controlled to 20 mm so as to cut the carbon fiber into a fiber length of 20 mm.

A strand passed through the cutter was introduced into a flexible transporting pipe arranged just below the rotary cutter and subsequently was introduced into an opening apparatus. As the opening apparatus, a double tube was prepared by welding SUS 304-made nipples having different diameters and used. A small hole was provided on an inner tube of the double tube and compressed air was supplied between the tube and an outer tube by means of a compressor. At this time, the wind velocity from the small hole was 100 m/sec. At a lower part of the tube, a tapered tube having a diameter increasing downward was welded.

From a side wall of the above tapered tube, the matrix was supplied. Then, a breathable support (hereinafter referred to as fixing net) capable of moving in a fixed direction was provided on a lower part of an outlet of the tapered tube, and suction was performed from a lower side thereof by means of a blower, and a mixture of the cut carbon fiber and the Nylon fiber was deposited in a belt form on the fixing net while the flexible transporting tube and the tapered tube were reciprocated in a width direction. The apparatus was operated with controlling the supplying amount of the reinforcing fiber to 500 g/min and the supplying amount of the matrix resin to 530 g/min, and thereby obtaining a random mat, in which the reinforcing fiber and the thermoplastic resin were mixed, on the support. The mat was heated on a pressing apparatus heated at 260°C using a mold having a concave portion at an upper part under 2.0 MPa for 5 minutes to obtain a shaped plate (I) having a thickness of 2.3 mm.

When the carbon fiber contained therein was analyzed for the obtained shaped plate (I), the critical number of single fiber defined by the above expression (a) was 86, the average number (N) of single fiber in the carbon fiber bundle (A) constituted by fibers of the critical number of single fiber or more was 420, and the ratio of the carbon fiber bundle (A) constituted by fibers of the critical number of single fiber or more was 85 Vol%. Moreover, the carbon fiber volume content was 43% (carbon fiber content on the basis of mass: 54%).

The shaped plate (I) was cut into a size of 400 mm×400 mm, and after drying it by means of a hot air dryer at 120°C for 4 hours, the shaped plate was heated up to 300°C by means of an infrared heater. A mold for flat plate of 400 mm×400 mm mold was set at 140°C, and after the shaped plate (I) was heated, two plates were layered and introduced into the mold. Then, pressurization was performed under a pressing pressure of 2 MPa for 1 minute to obtain a shaped plate (I') constituted by the fiber-reinforced plastic. The flexural modulus of the obtained fiber-reinforced plastic shaped plate was 26 GPa and the surface Ra was 3.8 $\mu$m. The plate was cut into a size according to each evaluation.

[Manufacture Example 2]

A fiber-reinforced plastic shaped plate (I'-2) was obtained in the same manner as in Manufacture Example 1 except that the carbon fiber areal weight was changed to 1200 g/m$^2$ and the Nylon resin areal weight was 1500 g/m$^2$. The flexural modulus of the obtained fiber-reinforced plastic shaped plate (I'-2) was 20 GPa and the surface Ra was 2.0 $\mu$m.

[Manufacture Example 3] Manufacture of Nylon Shaped Plate Containing no Carbon Fiber

Using a Nylon 6 resin A1030 manufactured by Unitika Ltd., the resin was heated on a pressing apparatus heated at 260°C under 2.0 MPa for 5 minutes to obtain a plastic shaped plate (II) made from the Nylon 6 and having a thickness of 2.3 mm.

The resulting shaped plate (II) was cut into a size of 400 mm×400 mm, and after drying is by means of a hot air dryer at 120°C for 4 hours, the shaped plate was heated up to 300°C by means of an infrared heater. A mold for flat plate of 400 mm×400 mm mold was set at 140°C, and after the shaped plate (II) was heated, two plates were layered and introduced into the mold. Then, pressurization was performed under a pressing pressure of 2 MPa for 1 minute to obtain a plastic shaped plate (II'). The flexural modulus of the obtained plastic shaped plate was 9 GPa and the surface Ra was 0.1 $\mu$m. The plate was cut into a size according to each evaluation.

[Example 1]

Two shaped plates (I') having a specific size obtained in Manufacture Example 1 were layered, and spot welding was performed by imparting an ultrasonic wave to the surface of one shaped plate (I') opposite to the layered surface while pressurizing force was applied by means of a welding horn (axis diameter $\varphi$: 4 mm, end diameter $\varphi$: 0.2 mm, final contact portion $\varphi$: 10 mm). Then, the impartment of the ultrasonic wave was stopped, and the whole was naturally cooled with maintaining the state of applying the pressurizing force. Thereafter, the horn was away from the shaped plate (I') to obtain a fiber-reinforced plastic joined body. As an ultrasonic welding machine, 2000XDt manufactured by BRANSON was used, as conditions at the time of welding, ultrasonic wave-imparting time was controlled to 1 second, pressurizing force before welding (immediately before the start of welding (impartment of the ultrasonic wave) )was controlled to 0.5 kN (pressure per unit area at the portion where the horn end and the fiber-reinforced resin shaped product were in contact: 50 MPa), pressurizing force during welding (after the start of the impartment) was controlled to 1.5 kN, the ratio of the pressurizing force applied to the horn before welding to the pressurizing force applied to the horn during welding was controlled to 33%, amplitude of the ultrasonic wave was controlled to 50 $\mu$m, and the used horn (tip for spot welding) had an axis diameter $\varphi$ of 4 mm and an end diameter $\varphi$ of 0.2 mm. Ultrasonic welding was performed under the same conditions using the plastic shaped plate (II') obtained in Manufacture Example 3 and comparison was performed with the strength (tensile shear strength and cross tensile strength) of the resulting joined body. The results are shown in Table 1. Meanwhile, the ratios of the tensile shear strength and cross tensile strength in the joined portion (BP1) of the fiber-reinforced plastic joined body to the tensile shear strength and cross tensile strength in the joined portion (BP2) of the resin joined body are described in the columns of "Comparison with Matrix" in the table.

As for the obtained joined body, a concave shaped dent was formed on the surface of one shaped plate (I') with which the horn came into contact and which was pressurized. The dent had an approximately cylindrical shape having a depth of about 3.0 mm and a diameter of about 4 mm.

The welding area in the joined portion (BP1) of the fiber-reinforced plastic joined body was 66 mm$^2$ and the welding area in the joined portion (BP2) of the resin joined body constituted by the thermoplastic resin as a matrix was 21 mm$^2$. Namely, the welding area in the joined portion (BP1) was 3.2 times the welding area in the joined portion (BP2).

[Example 2]

Two shaped plates (I') obtained in Manufacture Example 1 were welded in the same manner as in Example 1 using an ultrasonic welding machine (2000XDt, manufactured by BRANSON). As conditions at the time of welding, ultrasonic wave-imparting time was controlled to 1 second, pressurizing force before welding was controlled to 1.0 kN (pressure per unit area at the portion where the horn end and the fiber-reinforced resin shaped product were in contact: 100 MPa), pressurizing force during welding (after the start of impartment) was controlled to 1.5 kN, the ratio of the pressurizing force before welding to the pressurizing force during welding was controlled to 67%, amplitude of the ultrasonic wave was controlled to 50 μm, and as a tip for spot welding, the same one as in Example 1 was used. The plastic shaped plates (II') obtained in Manufacture Example 3 was subjected to ultrasonic welding under the same conditions, and comparison was performed with the strength obtained here. The results are shown in Table 1.

The welding area in the joined portion (BP1) was 4.9 times the welding area in the joined portion (BP2).

[Example 3]

Two shaped plates (I') obtained in Manufacture Example 1 were welded in the same manner as in Example 1 using an ultrasonic welding machine (2000XDt, manufactured by BRANSON). As conditions at the time of welding, ultrasonic wave-imparting time was controlled to 1 second, pressurizing force before welding was controlled to 1.5 kN (pressurizing force applied to the horn end: 150 MPa), pressurizing force during welding (after the start of impartment) was controlled to 2.0 kN, the ratio of the pressurizing force before welding to the pressurizing force during welding was controlled to 75%, amplitude of the ultrasonic wave was controlled to 50 μm, and as a tip for spot welding, the same one as in Example 1 was used. The plastic shaped plates (II') obtained in Manufacture Example 3 was subjected to ultrasonic welding under the same conditions, and the strength was compared in the same manner as in Example 1. The results are shown in Table 1.

The welding area in the joined portion (BP1) was 6.8 times the welding area in the joined portion (BP2).

[Example 4]

Two shaped plates (I') obtained in Manufacture Example 1 were welded in the same manner as in Example 1 using an ultrasonic welding machine (2000XDt, manufactured by BRANSON). As conditions at the time of welding, ultrasonic wave-imparting time was controlled to 1 second, pressurizing force before welding was controlled to 1.35 kN (pressurizing force applied to the horn end: 135 MPa), pressurizing force during welding (after the start of impartment) was controlled to 1.5 kN, the ratio of the pressurizing force before welding to the pressurizing force during welding was controlled to 90%, amplitude of the ultrasonic wave was controlled to 50 μm, and as a tip for spot welding, the same one as in Example 1 was used. The plastic shaped plates (II') obtained in Manufacture Example 3 was subjected to ultrasonic welding under the same conditions, and the strength was compared in the same manner as in Example 1. The results are shown in Table 1.

The welding area in the joined portion (BP1) was 6.8 times the welding area in the joined portion (BP2). However, a slight scratch was observed at the end of the tip for spot welding.

[Example 5]

Two shaped plates (I') obtained in Manufacture Example 1 were welded in the same manner as in Example 1 using an ultrasonic welding machine (2000XDt, manufactured by BRANSON). As conditions at the time of welding, ultrasonic wave-imparting time was controlled to 1 second, pressurizing force before welding was controlled to 0.35 kN (pressure per unit area at the portion where the horn end and the fiber-reinforced resin shaped product were in contact: 35 MPa), pressurizing force during welding (after the start of impartment) was controlled to 1.5 kN, the ratio of the pressurizing force before welding to the pressurizing force during welding was controlled to 23%, amplitude of the ultrasonic wave was controlled to 50 $\mu$m, and as a tip for spot welding, the same one as in Example 1 was used. The plastic shaped plates (II') obtained in Manufacture Example 3 was subjected to ultrasonic welding under the same conditions, and the strength was compared in the same manner as in Example 1. The results are shown in Table 1.

The welding area in the joined portion (BP1) was 3.0 times the welding area in the joined portion (BP2). However, a slight scratch was observed at the end of the tip for spot welding.

[Example 6]

Two shaped plates (I'-2) obtained in Manufacture Example 2 were welded in the same manner as in Example 1 using an ultrasonic welding machine (2000XDt, manufactured by BRANSON). As conditions at the time of welding, ultrasonic wave-imparting time was controlled to 1 second, pressurizing force before welding was controlled to 0.5 kN (pressure per unit area at the part where the horn end and the fiber-reinforced resin shaped product were in contact: 50 MPa), pressurizing force during welding (after the start of impartment) was controlled to 1.5 kN, the ratio of the pressurizing force before welding to the pressurizing force during welding was controlled to 33%, amplitude of the ultrasonic wave was controlled to 50 $\mu$m, and as a tip for spot welding, the same one as in Example 1 was used. The plastic shaped plates (II') obtained in Manufacture Example 3 was subjected to ultrasonic welding under the same conditions, and strength was compared in the same manner as in Example 1. The results are shown in Table 1.

The welding area in the joined portion (BP1) was 2.8 times the welding area in the joined portion (BP2).

[Example 7]

Two shaped plates (I'-2) obtained in Manufacture Example 2 were welded in the same manner as in Example 1 using an ultrasonic welding machine (2000XDt, manufactured by BRANSON). As conditions at the time of welding, ultrasonic wave-imparting time was controlled to 1 second, pressurizing force before welding was controlled to 0.5 kN (pressure per unit area at the part where the horn end and the fiber-reinforced resin shaped product were in contact: 5 MPa), pressurizing force during welding (after the start of impartment) was controlled to 1.0 kN, the ratio of the pressurizing force before welding to the pressurizing force during welding was controlled to 50%, amplitude of the ultrasonic wave was controlled to 50 $\mu$m, and as a horn, a knurl-type tip (diameter $\varphi$ of 10 mm, a knurl width of 0.1 mm, a knurl interval of 1.2 mm) was used. The plastic shaped plates (II') obtained in Manufacture Example 3 was subjected to ultrasonic welding under the same conditions as above, and strength was compared in the same manner as in Example 1. The results are shown in Table 1.

The welding area in the joined portion (BP1) was 3.7 times the welding area in the joined portion (BP2).

[Comparative Example 1]

Two shaped plates (I') obtained in Manufacture Example 1 were welded using an ultrasonic welding machine (2000XDt, manufactured by BRANSON). As conditions at the time of welding, ultrasonic wave-imparting time was controlled to 1 second, pressurizing force before welding was controlled to 0.05 kN (pressure per unit area at the part where the horn end and the fiber-reinforced resin shaped product were in contact: 5 MPa), pressurizing force during welding (after the start of impartment) was controlled to 1.5 kN, the ratio of the pressurizing force before welding to the pressurizing force during welding was controlled to 3%, amplitude of the ultrasonic wave was controlled to 50 $\mu$m, and the used horn (tip for spot welding) had an axis diameter $\varphi$ of 4 mm and an end diameter $\varphi$ of 0.2 mm. The plastic shaped plates (II') obtained in Manufacture Example 3 was subjected to ultrasonic welding under the same conditions, and strength was compared in the same manner as in Example 1. The results are shown in Table 1.

The welding area in the joined portion (BP1) of the fiber-reinforced plastic joined body was 36 mm$^2$ and the welding area in the joined portion (BP2) of the resin joined body constituted by the thermoplastic resin as a matrix was 21 mm$^2$. Namely, the welding area in the joined portion (BP1) was 1.7 times the welding area in the joined portion (BP2).

[Comparative Example 2]

Two shaped plates (I') obtained in Manufacture Example 1 were welded using an ultrasonic welding machine (2000XDt, manufactured by BRANSON). As conditions at the time of welding, ultrasonic wave-imparting time was controlled to 1 second, pressurizing force before welding was controlled to 0.1 kN (pressure per unit area at the part where the horn end and the fiber-reinforced resin shaped product were in contact: 10 MPa), pressurizing force during welding (after the start of impartment) was controlled to 1.5 kN, the ratio of the pressurizing force before welding to the pressurizing force during welding was controlled to 7%, amplitude of the ultrasonic wave was controlled to 50 $\mu$m, and the used horn (tip for spot welding) had an axis diameter $\varphi$ of 4 mm and an end diameter $\varphi$ of 0.2 mm. The plastic shaped plates (II') obtained in Manufacture Example 3 was subjected to ultrasonic welding under the same conditions, and strength was compared in the same manner as in Example 1. The results are shown in Table 1.

The welding area in the joined portion (BP1) was 1.9 times the welding area in the joined portion (BP2).

[Comparative Example 3]

Two shaped plates (I') obtained in Manufacture Example 1 were welded using an ultrasonic welding machine (2000XDt, manufactured by BRANSON). As conditions at the time of welding, ultrasonic wave-imparting time was controlled to 1 second, pressurizing force before welding was controlled to 0.2 kN (pressure per unit area at the part where the horn end and the fiber-reinforced resin shaped product were in contact: 20 MPa), pressurizing force during welding (after the start of impartment) was controlled to 1.5 kN, the ratio of the pressurizing force before welding to the pressurizing force during welding was controlled to 13%, amplitude of the ultrasonic wave was controlled to 50 μm, and the used horn (tip for spot welding) had an axis diameter φ of 4 mm and an end diameter φ of 0.2 mm. The plastic shaped plates (II') obtained in Manufacture Example 3 was subjected to ultrasonic welding under the same conditions, and strength was compared in the same manner as in Example 1. The results are shown in Table 1.

The welding area in the joined portion (BP1) was 2.1 times the welding area in the joined portion (BP2).

Table 1

|  | Tensile shear strength | Comparison with matrix | Cross tensile strength | Comparison with matrix |
|---|---|---|---|---|
| Example 1 | 2.8 kN | 4.0 | 0.9 kN | 2.3 |
| Example 2 | 3.2 kN | 4.6 | 1.1 kN | 2.8 |
| Example 3 | 3.8 kN | 5.4 | 1.4 kN | 3.5 |
| Example 4 | 3.8 kN | 5.4 | 1.4 kN | 3.5 |
| Example 5 | 2.5 kN | 3.6 | 0.9 kN | 2.3 |
| Example 6 | 2.5 kN | 3.5 | 0.8 kN | 2.1 |
| Example 7 | 2.5 kN | 3.8 | 1.1 kN | 2.4 |
| Comparative Example 1 | 1.6 kN | 2.3 | 0.4 kN | 1.0 |
| Comparative Example 2 | 1.8 kN | 2.6 | 0.5 kN | 1.3 |
| Comparative Example 3 | 1.9 kN | 2.7 | 0.5 kN | 1.3 |

Industrial Applicability

The fiber-reinforced plastic joined body of the invention has excellent joining strength, is possible to use, for example, in applications, such as structural members and components of an automobile, where excellent welding strength is required, and ensures weight reduction and the like of a vehicle body.

While the invention has been described in detail and with reference to specific embodiments thereof, it will be apparent to one skilled in the art that various changes and modifications can be made therein without departing from the spirit and scope thereof.

The present application is based on Japanese Patent Application No. 2013-153585 filed on July 24, 2013, and the contents are incorporated herein by reference.

**Claims**

1.    A fiber-reinforced plastic joined body comprising a joined portion (BP1) at which fiber-reinforced resin shaped products are fixed, the fiber-reinforced resin shaped product containing carbon fibers and a thermoplastic resin as a matrix by an ultrasonic welding,
wherein when a resin joined body having a joined portion (BP2) at which resin shaped products substantially constituted by the thermoplastic resin are fixed by the ultrasonic welding is regarded as a basis,

(i) tensile shear strength at the joined portion (BP1) of the fiber-reinforced plastic joined body is in the range of 3 to 8 times larger than a tensile shear strength at the joined portion (BP2) of the resin joined body, and
(ii) cross tensile strength at the joined portion (BP1) of the fiber-reinforced plastic joined body is in the range of 2 to 5 times larger than a cross tensile strength at the joined portion (BP2) of the resin joined body.

2. The fiber-reinforced plastic joined body according to claim 1,
wherein a welding area in the joined portion (BP1) of the fiber-reinforced plastic joined body is in the range of 2 to 10 times larger than a welding area at the joined portion (BP2) of the resin joined body.

3. A method for manufacturing the fiber-reinforced plastic joined body according to claim 1 or 2, the method comprising:

bringing surfaces of at least two fiber-reinforced resin shaped products into contact,
pressing a horn for the ultrasonic welding against a surface of at least one fiber-reinforced resin shaped product, the surface being opposite to a contact surface, while applying pressurizing force, and
imparting an ultrasonic wave to weld the fiber-reinforced resin shaped products,

wherein a pressurizing force applied to the horn before the welding is in the range of 20 to 100% of a pressurizing force applied to the horn during the welding.

4. The method for manufacturing the fiber-reinforced plastic joined body according to claim 3,
wherein a pressure per unit area of a portion at which the horn and the fiber-reinforced resin shaped product are in contact before the welding is 50 MPa or more.

5. The method for manufacturing the fiber-reinforced plastic joined body according to claim 3 or 4,
wherein the fiber-reinforced resin shaped product has a flexural modulus of 10 to 40 GPa.

6. The method for manufacturing the fiber-reinforced plastic joined body according to any one of claims 3 to 5,
wherein the fiber-reinforced resin shaped product has a surface Ra of 0.2 to 5 μm.

## INTERNATIONAL SEARCH REPORT

| International application No. |
|---|
| PCT/JP2014/069516 |

| A. CLASSIFICATION OF SUBJECT MATTER |
|---|
| *B29C65/08*(2006.01)i, *C08J5/04*(2006.01)i |

According to International Patent Classification (IPC) or to both national classification and IPC

| B. FIELDS SEARCHED |
|---|

Minimum documentation searched (classification system followed by classification symbols)
B29C65/08, C08J5/04

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | WO 2013/084963 A1 (Teijin Ltd.), 13 June 2013 (13.06.2013), paragraphs [0029] to [0032] (Family: none) | 1-6 |
| A | JP 2007-313778 A (Teijin Techno Products Ltd.), 06 December 2007 (06.12.2007), paragraphs [0018] to [0020]; fig. 1, 2 (Family: none) | 1-6 |
| A | JP 2000-500083 A (Allied Signal Inc.), 11 January 2000 (11.01.2000), page 6, line 1 to page 14 & US 5874146 A                & WO 1997/017189 A1 & CN 1207066 A | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 October, 2014 (20.10.14) | 28 October, 2014 (28.10.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/069516

C (Continuation). DOCUMENTS CONSIDERED TO BE RELEVANT

| Category* | Citation of document, with indication, where appropriate, of the relevant passages | Relevant to claim No. |
|---|---|---|
| E,A | WO 2014/148643 A1 (Origin Electric Co., Ltd.), 25 September 2014 (25.09.2014), paragraphs [0101] to [0104]; fig. 5 (Family: none) | 1-6 |

Form PCT/ISA/210 (continuation of second sheet) (July 2009)

**EP 3 025 850 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013043321 A
- JP 2012158141 A
- WO 2012105080 A
- JP 2013049208 A
- JP 2013153585 A